# EUROPEAN PATENT APPLICATION

(11) **EP 3 747 296 A1**
(43) Date of publication of application: **09.12.2020**
(21) Application number: 18903513.2
(22) Date of filing: 31.01.2018
(51) Int. Cl.: A43B 13/04

(54) **SHOE SOLE MEMBER AND SHOES**

(71) Applicant: ASICS Corporation, Kobe-shi, Hyogo 650-8555 (JP)
(72) Inventor: TATEISHI, Junichiro, Kobe-shi, Hyogo 650-8555 (JP); YAMADE, Takashi, Kobe-shi, Hyogo 650-8555 (JP); SAWADA, Daisuke, Kobe-shi, Hyogo 650-8555 (JP); OSAKI, Takashi, Kobe-shi, Hyogo 650-8555 (JP); HARANO, Kenichi, Kobe-shi, Hyogo 650-8555 (JP)
(74) Representative: Stolmár & Partner Patentanwälte PartG mbB
(86) International application number: PCT/JP2018/003230
(87) International publication number: WO 2019/150492

(57) **Abstract**

Provided is a shoe sole member partially or entirely formed of a resin composite, the resin composite including: a non-foamed elastic body matrix composed of an elastomer; a plurality of resin foam particles dispersed in the elastic body matrix; and a binder that lies between the elastic body matrix and the plurality of resin foam particles and has a hardness at 23 °C that is higher than a hardness at 23 °C of the elastic body matrix. Also provided is a shoe including the shoe sole member.

## Description

### FIELD

The present invention relates to a shoe sole member and a shoe, and more specifically, to a shoe sole member that is partially or entirely formed of a resin composite having a plurality of resin foam particles dispersed therein, and a shoe including the shoe member.

### BACKGROUND

Shoe sole members are required to have excellent cushioning performance. Generally, a foam product is used as a material for the shoe sole members that satisfy such requirements. For example, Patent Literatures 1 to 3 disclose shoe sole members composed of a foam product formed by welding a plurality of foam particles.

In the shoe sole member using such a foam product, the cushioning properties of the shoe sole member can be effectively enhanced by increasing the expansion ratio of the foam product. Further, due to the low initial stiffness of the foam product of high expansion ratio, shoes including such a foam product as the shoe sole member have soft and comfortable wearing feeling when the foot fits in the shoe.

However, when the shoe sole member for which such a conventional foam product is used is repeatedly and continuously subjected to high load by use, the shape restoring force of the foam product deformed due to the load is likely to decrease. This causes a problem that cushioning properties and durability of the shoe sole member are likely to decrease. Especially, in sports shoes such as basketball shoes and running shoes, of which the shoe soles are liable to be subjected to a high load, the load tends to concentrate in certain areas of the shoe sole member, in which the restoring force is likely to decrease.

In order to address such a problem, a shoe sole member in which a plurality of foam products respectively composed of different kinds of resin are combined together is known, as disclosed in Patent Literature 4. Combining together the plurality of foam products respectively composed of the different kinds of resin, as described above, enables the cushioning properties, shape restoring force, weight, or the like of the shoe sole member to be suitably adjusted.

However, such a shoe sole member is formed of different kinds of resin combined together, resulting in a relatively low adhesive strength at the interface between the different kinds of resin. Therefore, there is a problem that, when the shoe sole member is subjected to a high load, the different kinds of resin constituting the shoe sole member are liable to be separated from each other at their interface to thereby decrease the strength of the shoe sole member.

### CITATION LIST

### Patent Literature

Patent Literature 1: JP 2014-521418 T
Patent Literature 2: JP 2013-220354 A
Patent Literature 3: JP 2014-151210 A
Patent Literature 4: JP H8-238111 A

### SUMMARY

### Technical Problem

In view of the abovementioned problems, it is an object of the present invention to provide a shoe sole member having a high mechanical strength while having sufficient flexibility as the shoe sole member, and a shoe including the shoe sole member.

### Solution to Problem

The present inventors have found that, in a resin composite in which a plurality of resin foam particles are dispersed in a non-foamed elastic body matrix composed of an elastomer, a binder is provided between the elastic body matrix and the resin foam particles to cause them to adhere to each other, thereby solving the problem.

That is, a shoe sole member according to the present invention is partially or entirely formed of a resin composite, the resin composite including: a non-foamed elastic body matrix composed of an elastomer; a plurality of resin foam particles dispersed in the elastic body matrix; and a binder that lies between the elastic body matrix and the plurality of resin foam particles and has a hardness at 23 °C that is higher than a hardness at 23 °C of the elastic body matrix.

In the shoe sole member according to the present invention, for example, the hardness at 23 °C of the binder is higher than a hardness at 23 °C of the plurality of resin foam particles.

In the shoe sole member according to the present invention, for example, the hardness at 23 °C of the binder is lower than the hardness at 23 °C of the plurality of resin foam particles.

In the shoe sole member according to the present invention, for example, the elastomer includes a polystyrene-based elastomer, and the binder includes a polyolefin-based resin.

In the shoe sole member according to the present invention, for example, the plurality of resin foam particles are composed of a resin composition including a polyolefin-based resin, and the binder includes a polyolefin-based resin.

A shoe according to the present invention includes the abovementioned resin composition.

### BRIEF DESCRIPTION OF DRAWINGS

Fig. 1 is a schematic view showing a shoe in which a shoe sole member of one embodiment is used.
Fig. 2 is a schematic cross-sectional view of the shoe sole (midsole) of the embodiment.

### DESCRIPTION OF EMBODIMENTS

Hereinafter, an embodiment of a shoe sole member and a shoe of the present invention will be described with reference to the drawings. The following embodiments are shown merely as examples. The present invention is not limited to the following embodiments at all.

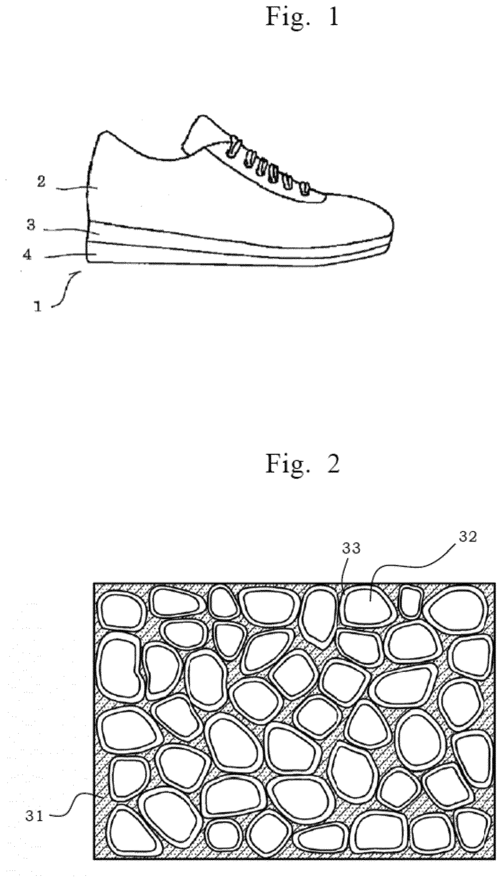

Fig. 1 shows a shoe 1 provided with a shoe sole member of this embodiment as a midsole. The shoe 1 includes an upper member 2 covering an upper side of a foot, and shoe sole members 3 and 4 disposed on a lower side of the upper member 2 to form a shoe sole. The shoe 1 includes, as the shoe sole members, an outer sole 4 disposed at a position to engage with the ground, and a midsole 3 disposed between the upper member 2 and the outer sole 4.

Fig. 2 is a schematic cross-sectional view of the midsole 3, which is the shoe sole member of this embodiment. As shown in Fig. 2, the midsole 3, which is the shoe sole member of this embodiment, is formed of a resin composite including: a non-foamed elastic body matrix 31 composed of an elastomer; a plurality of resin foam particles 32 dispersed in the elastic body matrix 31; and a binder 33 that lies between the elastic body matrix and the plurality of resin foam particles. The binder has a hardness at 23 °C being higher than the hardness at 23 °C of the elastic body matrix 31. With such a configuration, the midsole 3 has sufficient flexibility as a shoe sole member, and is excellent in mechanical strength such as tensile strength and an elongation rate since the midsole 3 even when subjected to a high load has the binder 33 that causes the elastic body matrix 31 and the resin foam particles 32 to be hardly separated from each other at their adhesive interface. Thus, the shoe including the midsole 3 as the shoe sole member can exhibit a high mechanical strength while exhibiting soft wearing feeling when the foot fits into the shoe based on the flexibility of the midsole 3.

The midsole 3 with such a configuration is characterized in that it has a relatively small initial stiffness, has a relatively large amount of strain during normal use and a relatively small amount of strain at a high load, is sufficiently lightweight as a shoe sole member, and has a relatively high elastic recovery. Thus, the shoe including the midsole 3 as the shoe sole member has advantages that it exhibits soft wearing feeling when the foot fits in the shoe, can suppress excessive deformation while having sufficient lightweight properties, can exhibit high cushioning properties, and is excellent in durability. Here, the high-load state of the shoe sole member means the state where it is subjected to stress of approximately 0.6 to 1.0 MPa.

In the resin composite of the present invention, the state where the plurality of resin foam particles are dispersed in the foamed elastic body matrix refers to the state where substantially all of the plurality of resin foam particles included in the resin composite are independently distributed in the foamed elastic body matrix without being welded to each other (that is, distributed in the elastic body matrix so that less than 10% in the number of the plurality of resin foam particles included in the resin composite are welded to each other). That is, it refers to the state where the substantially all of the plurality of resin foam particles have the surfaces on which the binder or the foamed elastic body matrix is present. The abovementioned dispersion state in the midsole 3 can be checked as follows. First, the midsole 3 is cut in its thickness direction to observe the cross-sectional surface. Among the resin foam particles exposed to the cross-sectional surface, the percentage of the number of resin foam particles directly welded to an adjacent resin foam particle without the binder or matrix resin therebetween is calculated. The same cutting, observation, and calculation are carried out at least at three different positions of the midsole 3, and the percentages of the numbers of directly welded resin foam particles respectively calculated for these positions are averaged. In the resin composite of the present invention, the average of the percentages of the numbers thus obtained is less than 10%.

In the shoe 1 of this embodiment, the midsole 3 is formed of the resin composite, but the outer sole 4 instead of the midsole 3 may be formed of the resin composite, or both the midsole 3 and the outer sole 4 may be formed of the resin composite. The midsole 3 or the outer sole 4 may be partially formed of the resin composite.

### (Elastic body matrix)

The resin composite of this embodiment has an elastic body composed of an elastomer as a matrix (an elastic body matrix). In this description, the elastic body composed of an elastomer generally includes 10% or more (weight ratio) of the resin component based on the component constituting the elastomer.

The resin component may be a thermoplastic resin or may be a thermosetting resin. In the case where the resin component is a thermoplastic resin, it has an advantage of being easily molded. In the case where the resin component is a thermosetting resin, it has an advantage of being excellent in heat resistance, chemical resistance, and mechanical strength.

The thermoplastic resin is not particularly limited, but for example a polystyrene-based resin, a polyolefin-based resin, or a thermoplastic polyurethane-based resin may be used. In the case where the thermoplastic resin is a polystyrene-based resin, the polystyrene-based resin may be, for example, a styrene-ethylene-butylene-styrene block copolymer (SEBS), a styrene-butadiene-butylene-styrene block copolymer (SBBS), hydrogenated polystyrene-poly(styrene-butadiene)-polystyrene (SSEBS), a styrene-butylene-styrene block copolymer (SBS), a styrene-isoprene block copolymer (SIS), a styrene-ethylene-propylene-styrene block copolymer (SEPS), or the like, and SEBS, SSEBS, or SIS is more preferable. In the case where the thermoplastic resin is a polyolefin-based resin, the polyolefin-based resin may be, for example, a low density polyethylene, a medium density polyethylene, an ethylene-α-olefin copolymer, ethylene-propylene rubber, polypropylene, an ethylene-vinyl acetate copolymer, an ethylene-acrylic acid copolymer, or the like, and an elastomer including an ethylene crystal phase as a hard segment is preferable. More specifically, the polyolefin-based resin is preferably an elastomer constituted by polymer chains each of which has an ethylene crystal phase(s) at one end or both ends thereof, or a block copolymer having ethylene crystal phases and ethylene-alpha olefin copolymerized portions arranged alternately. In the case where the thermoplastic resin is a thermoplastic polyurethane-based resin, the thermoplastic polyurethane-based resin may be, for example, polyether-based polyurethane, polyester-based polyurethane, or the like, and polyether polyurethane is more preferable.

The thermosetting resin is not particularly limited, but preferably a thermosetting polyurethane-based elastomer, an acrylic elastomer, crosslinked rubber, a silicone-based elastomer, or a fluorine-based elastomer, and a urethane-based elastomer is particularly preferable.

These resin components may be individually used, or two or more of them may be used in combination.

As the resin component, a polystyrene-based elastomer is preferably selected. In this case, the initial elastic modulus of the elastomer can be adjusted to an appropriate value by appropriately adjusting the content of the styrene component (styrene content) in the polystyrene-based elastomer. Thereby, the initial stiffness and the amount of strain of the shoe sole member can be adjusted to appropriate values.

The elastomer may further include a plasticizer. In this case, the elastomer may be a polymeric gel in which the resin included therein is gelled. The plasticizer may be, for example, paraffinic, naphthenic, aromatic, olefinic, or the like, with paraffinic being more preferred. In the case where the elastomer includes a plasticizer, the content of the plasticizer included in the elastomer is preferably 10 to 300 weight % based on 100 weight % of the resin component, more preferably 50 to 200 weight % based on 100 weight % of the resin component, further preferably 75 to 150 weight % based on 100 weight % of the resin component.

In the case where the resin component is a thermoplastic resin, it is preferable that the elastomer have sufficient fluidity at a temperature at which the resin composite constituting the plurality of resin foam particles is stable in terms of shape and chemical aspects. In this case, the plurality of resin foam particles can be easily dispersed in the elastic body matrix at the time of producing the resin composite. For example, in the case where the resin composite constituting the plurality of resin foam particles also includes a thermoplastic resin, it is preferable that the elastomer have sufficient fluidity at temperatures lower than the melting point or softening point of the resin composition constituting the plurality of resin foam particles. Specifically, the elastomer preferably has a complex viscosity of 0.1 MPa·s or less at the temperatures. Here, in the case where the thermoplastic resin is a polystyrene-based elastomer, it is preferable that the polystyrene-based elastomer have a complex viscosity at 100 °C of 0.05 MPa -s or less.

In this description, the complex viscosities of the elastomer and the binder to be discussed later refer to values obtained by measurement at a frequency of 10 Hz in the measurement mode of the "tensile mode of a sinusoidal strain", based on JIS K 7244-4:1999 (equivalent to ISO 6721-4:1994). For example, the complex viscosity of the elastomer can be measured using "Rheogel-E4000", a dynamic viscoelasticity measurement instrument manufactured by UBM as a measurement instrument, under the following conditions:
Measurement mode: Tensile mode of a sinusoidal strain
Frequency: 10 Hz
Distance between chucks: 20 mm
Load: Automatic static load
Dynamic strain: 5 pm
Heating rate: 2 °C/min
Test piece: Strip shape having a length of 33 ± 3 mm, a width of 5 ± 1 mm, and a thickness of 2 ± 1 mm

The elastomer may include any other component, and may further include chemicals such as pigments, antioxidants, and ultraviolet absorbers.

The amount of the resin component included in the elastomer is preferably 20 weight % or more, more preferably 30 weight % or more, further preferably 40 weight % or more, based on the entire elastomer.

The hardness of the elastomer is lower than the hardness of the binder at 23 °C. Thus, the resin composite of this embodiment maintains the flexibility of the elastic body matrix composed of the elastomer, and at the same time allows the binder with a relatively high hardness to reduce deformation at the interface between the elastic body matrix and the resin foam particles when subjected to a load, thereby having an advantage of effectively suppressing separation at the interface due to the deformation. In this description, the hardnesses of the elastomer, the binder, and the resin foam particles can be compared with each other based on their Asker C hardnesses stipulated in JIS K 7312: 1996, or their Shore A hardnesses stipulated in JIS K 6253-3: 2012 (ISO 7619-1: 2010). The hardnesses of the elastomer, the binder, and the resin foam particles are preferably compared with each other based on their Asker C hardnesses if test pieces respectively of these components can be individually produced. If it is difficult to produce these test pieces individually and a measurement is required for the resin composite, the comparison is preferably made using a Shore A durometer, which has a probe thinner than that of an Asker C durometer. In the case, for example, where the hardnesses of these components are compared with each other using the resin composite, the harness of the elastomer or the binder can be measured by cutting the resin composite, selecting a portion having the cross-sectional surface in which the elastomer or the binder having a certain size to be an aggregate form is present, and causing the probe of the Shore A durometer to collide with the portion. The hardness of the resin composite can be measured by selecting a portion having the cross-sectional surface close to which the resin foam particles are present, and causing the probe of the Shore A durometer to collide with the portion. In this case, the elastomer or binder formed into a thin film is present between the cross-sectional surface and the resin foam particles; thus, in terms of improving the measurement accuracy, a place of the cross-sectional surface in which the resin foam particles are present closest possible to the cross-sectional surface is preferably selected as a measurement point. In the case where these hardnesses are compared with each other using the resin composite, it is preferable that the comparison be performed using instantaneous values, which are less likely to reflect the influence of a deep portion than that of a surface portion of the cross-sectional surface. The instantaneous values may also be used for the comparison based on Asker C hardness. The hardness at 23 °C of the elastomer in Asker C hardness (instantaneous value) is preferably 25 or more and 75 or less, more preferably 30 or more and 55 or less, further preferably 35 or more and 50 or less. In this case, the resin composite including the elastomer has suitable flexibility as a shoe sole member, and can exhibit soft wearing feeling when the foot fits into the shoe.

The initial elastic modulus of the elastomer is not particularly limited, but the initial elastic modulus at 23 °C may preferably be 0.1 MPa or more and 5 MPa or less, more preferably be 0.2 MPa or more and 3 MPa or less, further preferably be 3 MPa or less. In this case, the initial stiffness and the amount of strain of the resin composite can be set to values more suitable for the shoe sole member. When the initial elastic modulus at 23 °C of the elastomer is less than 0.1 MPa, the shoe sole member including the elastomer may have insufficient durability and mechanical strength. In this description, the elastic modulus (Young's modulus) of each of various materials and members, such as the elastomer, means a compressive elastic modulus at 23 °C. Measurement of the compressive elastic modulus of the elastomer can be performed, for example, by the method described in Examples to be described later. As the value of the elastic modulus of the elastomer, the value of the storage modulus at 23 °C as measured by the method according to JIS K 7244-4: 1999 (equivalent to ISO 6721-4: 1994) as abovementioned can also be used.

The elastic body matrix is a non-foam product. Thus, the elastic body matrix can have a relatively high density. As a result, the resin composite can effectively exhibit its characteristics that it has a small amount of strain at a high load. In addition, use of the non-foamed elastic body matrix also brings an advantage that, at the time of molding the resin composite, which will be described later, deformation of the molded products caused by shrinkage of the resin foam particles, which may occur when a plurality of materials with different degrees of foaming are mixed and hot-pressed, does not occur.

### (Resin foam particles)

The resin composite of this embodiment has a plurality of resin foam particles dispersed in the non-foamed elastic body matrix. In this description, the resin foam particles mean foam particles composed of a resin composition and having a plurality of voids in the resin composition.

The plurality of resin foam particles may be composed of any resin composition capable of being made into resin foam particles. For example, the resin composition may be a polyolefin such as polyethylene (PE) or polypropylene (PP), thermoplastic polyurethane (TPU), polystyrene (PS), ethylene-propylene rubber (EPDM), polyether block amide (PEBA), polyesters (PEs), ethylene vinyl acetate (EVA), or polyamide (PA). Preferably, the resin composition may be a polyolefin-based resin, a polyurethane-based resin, or a polystyrene-based resin, and for example the aforementioned polyolefin-based resin or polyurethane-based resin, which can be used as a resin component included in the elastomer, can be used. These resin compositions may be individually used, or two or more of them may be used in combination.

It is preferable that a resin having high weldability to the binder be used as the resin composition constituting the plurality of resin foam particles. For example, in the case where the binder includes a polyolefin-based rein, the resin composition constituting the resin foam particles is preferably a polyolefin-based resin.

In the case where the resin component included in the elastomer is a thermoplastic resin, it is preferable that the melting point of the resin composition constituting the plurality of foamed resin particles be higher than the temperature at which the elastomer is capable of having sufficient fluidity. In this case, the plurality of resin foam particles can be easily dispersed in the elastic body matrix at the time of producing the resin composite. Preferably, the melting point of the resin composition constituting the plurality of resin foam particles may be 100 °C to 180 °C.

The elastic modulus of the resin composition is not particularly limited, but for example, the initial elastic modulus at 23 °C may be 10 MPa or more and 400 MPa or less.

The resin composition may include any other component, and may further include chemicals such as pigments, antioxidants, and ultraviolet absorbers.

The plurality of resin foam particles can be made from the resin composition using a conventionally known method. Specifically, the resin foam particles constituting the resin foam particles may be made by, for example, an impregnation method in which resin particles free from foaming agents are made, followed by impregnation of the resin particles with a foaming agent, or an extrusion method in which a resin composition including a foaming agent is extruded into cooling water for granulation. In the impregnation method, the resin composition is first molded to make resin particles. Next, the resin particles, a foaming agent, and an aqueous dispersant are introduced into an autoclave, followed by stirring under heat and pressure, to impregnate the resin particles with the foaming agent. The foaming agent with which the resin particles are impregnated is caused to foam to obtain the resin foam particles. In the extrusion method, for example, the resin composition and a foaming agent are added into an extruder equipped with a die having many small holes at its tip, followed by melt-kneading. The molten-kneaded product is extruded from the die into the form of strands and thereafter is immediately introduced into cooling water to be cured. The thus obtained cured material is cut into a specific length to obtain the resin foam particles.

The foaming agent used in the aforementioned methods is not particularly limited and may be, for example, a chemical foaming agent or a physical foaming agent. The chemical foaming agent is a foaming agent that generates a gas by chemical reaction or thermal decomposition. Examples of the chemical foaming agent include inorganic chemical foaming agents such as sodium bicarbonate and ammonium carbonate, and organic chemical foaming agents such as azodicarbonamide. The physical foaming agent is, for example, a liquefied gas or a supercritical fluid, and is foamed by pressure reduction or heating. Examples of the physical foaming agent include aliphatic hydrocarbons such as butane, alicyclic hydrocarbons such as cyclobutane, and inorganic gases such as carbon dioxide gas, nitrogen, and air.

In this embodiment, in order to make the resin foam particles, an impregnation method using a supercritical fluid for foaming the resin composition is particularly preferably used. In this case, the resin composition can be dissolved in the supercritical fluid at a comparatively low temperature, and therefore the need for a high temperature for melting the resin composition is eliminated. This is particularly advantageous when the resin composition includes a resin with a high melting point, such as a polyamide-based elastomer. Further, the method is advantageous also in that generation of toxic gases due to foaming of a chemical foaming agent is suppressed since no chemical foaming agent is used.

The density and the expansion ratio of the plurality of resin foam particles are not particularly limited.

The shape and the size of the plurality of resin foam particles are not particularly limited. The shape of the resin foam particles is preferably spherical. In this case, the volume-average particle size D50 (median diameter) of the resin foam particles may be preferably in a diameter range of 1 to 20 mm, more preferably in a diameter range of 2 to 10 mm. In this description, the particle size of the resin particles means a value obtained by measuring the long diameter of each of the particles using a microscope.

The hardness at 23 °C of the resin foam particles in Asker C hardness (instantaneous value) is preferably 30 or more, preferably 40 or more, preferably 40 or more and 80 or less. In this case, the resin composite including the resin foam particles can effectively suppress excessive deformation while exhibiting high cushioning properties.

The initial elastic modulus of the resin foam particles is not particularly limited, but the initial elastic modulus at 23 °C of the foamed particles may preferably be 0.2 MPa or more and 20 MPa or less, more preferably be 0.3 MPa or more and 10 MPa or less. In this case, the initial stiffness and the amount of strain of the resin composite can be set to values more suitable for the shoe sole member.

### (Binder)

The resin composite of this embodiment includes the binder that has a higher hardness than the hardness of the elastic body matrix and that lies between the elastic body matrix and the plurality of resin foam particles. The binder causes the elastic body matrix and the plurality of resin foam particles to adhere to each other. More specifically as to the hardness of the binder of this embodiment, the hardness at 23 °C of the binder is higher than the hardness at 23 °C of the elastic body matrix. Thus, the resin composite of this embodiment maintains the flexibility of the elastic body matrix composed of the elastomer, and at the same time can reduce deformation of the interface between the elastic body matrix and the resin foam particles when subjected to a load, thereby having an advantage of effectively suppressing separation at the interface due to the deformation. The hardness at 23 °C of the binder in Asker C hardness (instantaneous value) is preferably 40 or more, preferably 50 or more, and preferably 50 or more and 80 or less. In this case, the abovementioned characteristics of the binder can be more effectively exhibited.

The hardness at 23 °C of the binder may be higher or lower than the hardness of the resin foam particles. For example, in the case where the hardness of the binder is higher than the hardness of the resin foam particles, the binder having a hardness higher than that of the resin foam particles is to be present around the resin foam particles. This can effectively suppress a decrease in shape restoring force of the resin foam particles resulting from the repetitive and continuous compression and deformation of the resin composite subjected to a high load. Therefore, the resin composite has an advantage that its durability is effectively enhanced. In the case where the hardness of the binder is lower than the hardness of the resin foam particles, the hardness of the binder falls within a range between the hardness of the elastomer constituting the elastic body matrix and the hardness of the resin foam particles. This allows the binder lying between the elastic body matrix and the resin foam particles to reduce the stress generated at the interface therebetween, thereby more effectively suppressing the separation at the interface caused by the deformation of the resin composite. Thus, the resin composite has an advantage that its mechanical strength is more effectively increased.

The binder may include any resin component capable of causing the elastic body matrix and the resin foam particles to adhere to each other. For example, the binder may include a resin component excellent in weldability to the elastomer constituting the elastic body matrix, among the aforementioned resin compositions that can be used as the resin composition constituting the resin foam particles. The binder may preferably include a polyolefin-based resin, a polyurethane-based resin, or a polystyrene-based resin, as the resin component. As such a resin component, for example, the aforementioned polyolefin-based resin or polyurethane-based resin that can be used as the resin component included in the elastomer may be used, similar to the case of the resin composition constituting the resin foam particles. The resin component may be a thermoplastic resin or may be a thermosetting resin. The resin components included in the binder may be individually used, or two or more of them may be used in combination.

Preferably, the resin component included in the binder may be a resin of the same base as the resin component included as the main component in the resin composition constituting the plurality of resin foam particles. For example, in the case where the resin composition constituting the resin foam particles includes a polyolefin-based resin as the main component, the binder preferably includes a polyolefin-based resin. In this description, the resin component included as the main component in the resin composition means a resin component 10 weight % or more of which is included in the resin composition based on the entire resin composition.

Examples of the preferable combination of the materials so that the binder can cause the elastic body matrix and the plurality of resin foam particles to adhere to each other are as follows. In the case where the elastomer constituting the elastic body matrix includes a polystyrene-based resin and the resin composition constituting the resin foam particles includes a polyolefin-based resin as the main component, the binder preferably includes a polyolefin-based resin.

The binder may further include a plasticizer. In this case, the binder may be a polymeric gel in which the resin included therein is gelled. The plasticizer may be, for example, paraffinic, naphthenic, aromatic, olefinic, or the like, with paraffinic being more preferred. In the case where the binder includes a plasticizer, the content of the plasticizer included in the binder is preferably 10 to 300 weight % based on 100 weight % of the resin component, more preferably 50 to 200 weight % based on 100 weight % of the resin component, further preferably 75 to 150 weight % based on 100 weight % of the resin component.

In the case where the resin component included in the binder is a thermoplastic resin, it is preferable that the binder have sufficient fluidity at a temperature at which the resin composite constituting the plurality of resin foam particles is stable in terms of shape and chemical aspects. In this case, the binder can be easily attached to the plurality of resin foam particles at the time of producing the resin composite. For example, in the case where the resin composition constituting the plurality of resin foam particles also includes a thermoplastic resin, it is preferable that the binder have sufficient fluidity at temperatures lower than the melting point or softening point of the resin composition constituting the plurality of foamed resin particles. Specifically, the binder preferably has a complex viscosity of 0.1 MPa·s or less at the temperatures. In the case where the thermoplastic resin is a polyolefin-based resin, it is preferable that the complex viscosity at 100 °C of the polyolefin-based resin be 0.05 MPa·s or less.

The binder may include any other component, and may further include chemicals such as pigments, antioxidants, and ultraviolet absorbers.

The amount of the resin component included in the binder is preferably 20 weight % or more, more preferably 30 weight % or more, further preferably 40 weight % or more, based on the entire binder.

The initial elastic modulus of the binder is not particularly limited, but the initial elastic modulus at 23 °C may preferably be 0.1 MPa or more and 100 MPa or less, more preferably be 0.2 MPa or more and 50 MPa or less. When the initial elastic modulus at 23 °C of the binder is less than 0.1 MPa, the shoe sole member including the binder may have insufficient durability and mechanical strength.

### (Resin composite)

The resin composite of this embodiment is composed of the plurality of resin foam particles dispersed in the non-foamed elastic body matrix, and includes the binder that has a higher hardness than the hardness of the elastic body matrix and that lies between the elastic body matrix and the plurality of resin foam particles. With this configuration, the shoe sole member of this embodiment has an advantage of being excellent in mechanical strength while having sufficient flexibility, as compared with a conventional shoe sole member.

The mixing ratio of the elastomer constituting the elastic body matrix and the plurality of resin foamed particles included in the resin composite is not particularly limited, but for example, the weight ratio may be that elastomer: resin foam particles = 30: 70 to 90:10, more preferably 40: 60 to 80:20. In this case, the resin composite can effectively exhibit cushioning properties and soft wearing feeling when the foot fits into the shoe based on the elastomer, and can effectively exhibit sufficient lightweight properties based on the resin foam particles. The mixing ratio between the binder and the plurality of resin foam particles included in the resin composite is not particularly limited, but the weight ratio of the binder: the resin foam particles may be 30: 70 to 90: 10, more preferably 40: 60 to 80: 20. In this case, the mechanical strength of the resin composite can be efficiently increased. Preferably, the content ratio between the total of the elastomer and the binder included in the resin composite, and the plurality of resin foam particles may be, for example, that elastomer + binder: resin foam particles = 30: 70 to 90: 10, more preferably 40: 60 to 80: 20 in weight ratio.

The resin composite can be obtained by, for example, coating the surfaces of the plurality of resin foam particles with the binder, followed by mixing the elastomer and the plurality of resin foam particles coated with the binder, and introducing the obtained mixture into a forming mold for hot-pressing in the forming mold. Using such a method, the resin composite in which the plurality of resin foam particles are dispersed in the elastic body matrix constituted by the elastomer and the binder lies between the elastic body matrix and the plurality of resin foam particles can be produced.

The method for coating the surfaces of the plurality of resin foam particles with the binder is not particularly limited, and a conventionally known method can be used. For example, the surfaces of the plurality of resin foam particles can be coated with the binder by kneading the plurality of resin foam particles and the binder using an open roll, mixer, or the like.

The temperature at which the surfaces of the plurality of resin foam particles are coated with the binder can be a temperature at which the resin composition constituting the plurality of resin foam particles is stable in terms of shape and chemical aspects and at which the binder has sufficient fluidity. Such a temperature can be appropriately adjusted depending on the type of the resin composition constituting the plurality of resin foam particles and the type of the resin composition constituting the binder. For example, in the case where the resin foam particles are composed of a polyolefin-based resin and the binder includes a polyolefin-based resin, the temperature is preferably in the range of 80 to160 °C.

At the time of coating the surfaces of the plurality of resin foam particles with the binder, the surfaces of the resin foam particles may be coated with the binder in the state where the binder is dispersed in liquid (i.e., in the emulsion state). This can increase the fluidity of the binder relatively easily.

The method for mixing the elastomer and the plurality of resin foam particles coated with the binder is not particularly limited, either, and a conventionally known method can be used. For example, the elastomer and the plurality of resin foam particles coated with the binder are preliminarily kneaded together using an open roll, mixer, or the like to produce a preliminary kneaded material in which the plurality of resin foam particles coated with the binder are dispersed in the elastic body matrix constituted by the elastomer. Preferably, the elastomer may be subjected to the abovementioned preliminary kneading after being formed into particles using a conventionally known method. The shape and the size of the elastomer formed into particles are not particularly limited.

The temperature at the time of the hot pressing can be a temperature at which the resin composition constituting the plurality of resin foam particles is stable in terms of shape and chemical aspects and at which the elastomer has sufficient fluidity. Such a temperature can be appropriately adjusted depending on the type of the resin composition constituting the plurality of resin foam particles and the type of the resin composition constituting the elastomer. For example, in the case where the resin foam particles are composed of a polyolefin-based resin and the elastomer is composed of a polystyrene-based elastomer, the plurality of resin foam particles with which the elastomer is mixed can be hot-pressed appropriately under pressure at a temperature within the range of 80 to 160 °C.

Preferably, at the time of the hot pressing, a liquid (for example, water) that can vaporize during hot pressing can be additionally introduced into the forming mold to perform the hot pressing while the liquid is being vaporized. In this case, the heat during the hot pressing is transferred to the inside of the entire forming mold via steam to thereby enable relatively uniform heating of the inside of the entire forming mold. In the case where the surfaces of the plurality of resin foam particles are coated with the binder that is in the state of being dispersed in liquid, the aforementioned effect can be exhibited by vaporizing the liquid included in the binder in the above state at the time of the hot pressing.

In this embodiment, various resin composites having a wide range of physical properties can be obtained by appropriately adjusting the mixing ratio between the elastomer and the plurality of resin foam particles both included in the resin composite, depending on the required initial stiffness and amount of strain. For example, the amount of the elastomer included in the resin composite may be 5 to 90% (volume ratio) based on the entire resin composite. In this case, the weight of the resin composite can be appropriately reduced and the elastic recovery of the resin composite can be appropriately increased.

Alternatively, the resin composite may be made by adjusting the mixing ratio between the plurality of resin foam particles and the elastomer depending on the required initial stiffness and amount of strain independently for every given area before dispersing the plurality of resin foam particles coated with the binder in the elastic body matrix, and thereafter dispersing the plurality of resin foam particles in the elastic body. For example, in the case where the aforementioned method in which the mixture of the plurality of resin foam particles and the elastomer is hot-pressed is used, the mixing ratio of the elastomer in areas of the shoe sole member that are likely to be subjected to a relatively large load, specifically, areas of a heel portion and a forefoot portion, may be higher than the mixing ratio of the resin composition in other areas. The heel portion of the shoe sole member having a large mixing ratio of the elastomer can effectively exhibit the shock absorbing effect due to the characteristics of the elastomer even in the case where the heel portion is subjected to a relatively large load when the wearer lands in the motion of various sports. In addition, the forefoot portion of the shoe sole member having a large mixing ratio of the elastomer suppresses excessive deformation of the shoe sole at the time of the wearer's cutting maneuvers, and thereby enables the wearer to smoothly transfer his or her body weight. On the other hand, in an area of the shoe sole member that is less likely to be subjected to a relatively large load, the mixing ratio of the elastomer may be made smaller than the mixing ratio of the resin composition in other areas. For example, the midfoot portion of the shoe sole member, which is less likely to be subjected to a large load, may have a certain degree of cushioning properties. Thus, the area of the midfoot portion may have a small mixing ratio of the elastomer, thereby making it possible to reduce the weight of the shoe sole member. As described above, the mixing ratio between the plurality of resin foam particles and the elastomer is adjusted independently for every given area, so that the resin composite of which the initial stiffness and the amount of strain are different for every given area can be formed.

The resin composite of this embodiment has a relatively small initial stiffness, a relatively large amount of strain during normal use, and a small amount of strain at a high load. The initial stiffness and the amount of strain can be determined from a compressive stress-strain curve based on the method described in Examples below. The initial elastic modulus at 23 °C of the resin composite is preferably 10 MPa or less, more preferably 5 MPa or less.

The resin composite of this embodiment includes: the non-foamed elastic body matrix composed of the elastomer; the plurality of resin foam particles dispersed in the elastic body matrix; and the binder that lies between the elastic body matrix and the plurality of resin foam particles and that has the hardness at 23 °C being higher than the hardness at 23 °C of the elastic body matrix, and thus has an advantage of being excellent in mechanical strength such as tensile strength and an elongation rate while having sufficient flexibility for forming the shoe sole member. The tensile strength of the resin composite is preferably 0. 3 MPa or more, more preferably 0. 5 MPa or more. The elongation rate of the resin composite is preferably 100% or more, more preferably 200% or more. Measurement of the tensile strength and the elongation rate of the resin composite can be performed, for example, by the method described in Examples to be described later. The hardness at 23 °C of the resin composite in Asker C hardness is preferably 80 or less, more preferably 70 or less so that the resin composite has sufficient flexibility as the shoe sole member.

The resin composite of this embodiment has a relatively small initial stiffness, a relatively large amount of strain during normal use, and a small amount of strain at a high load. The initial stiffness and the amount of strain can be determined from a compressive stress-strain curve based on the method described in Examples below. The initial elastic modulus at 23 °C of the resin composite is preferably 10 MPa or less, more preferably 5 MPa or less.

The resin composite of this embodiment includes the non-foamed elastic body composed of the elastomer as a matrix, and thus has a smaller permanent compression set than that of a foam product used for a conventional shoe sole member. Therefore, the shoe sole member of this embodiment formed of the resin composite has also an advantage of being excellent in elastic recovery.

### (Shoe sole member and shoe)

The shoe sole members of this embodiment, and the shoes including the shoe sole members can be produced in the same manner as conventionally known methods for producing shoes.

For example, a method for producing shoe sole members including the shoe sole members of this embodiment includes the following steps:
(a) a first step of producing each of the plurality of resin foam particles from the first resin composition by the abovementioned impregnation method, extrusion method, or the like;
(b) a second step of coating the surfaces of the plurality of resin foam particles with the binder using an open roll, mixer, or the like;
(c) a third step of preliminarily kneading the elastomer and the plurality of resin foam particles coated with the binder obtained in the second step, using an open roll, mixer, or the like;
(d) a fourth step of introducing the preliminarily kneaded material obtained in the third step into a forming mold, followed by hot-pressing the forming mold using a head press machine, to obtain a resin composite in which the plurality of resin foam particles are dispersed in the elastic body matrix composed of the elastomer; and
(e) a fifth step of producing shoe sole members that are partially or entirely formed of the resin composite obtained in the fourth step.
In this producing method, the preliminarily kneaded material in which the plurality of resin foam particles coated with the binder in the second step are dispersed in the elastic body matrix composed of the elastomer is produced by the preliminary kneading in the third step. The preliminarily kneaded material is molded into a resin composite having a desired shape in the subsequent fourth step.

In the fourth step in these producing methods, the shoe sole member may be directly molded by hot pressing using a forming mold. In this case, shoe sole members that are entirely formed of the resin foam product can be directly produced, and therefore the fifth step can be omitted.

As described above, the shoe sole member of this embodiment is partially or entirely formed of a resin composite including: a non-foamed elastic body matrix composed of an elastomer; a plurality of resin foam particles dispersed in the elastic body matrix; and a binder that lies between the elastic body matrix and the plurality of resin foam particles and has a hardness at 23 °C being higher than a hardness at 23 °C of the elastic body matrix. The shoe sole member of this embodiment has sufficient flexibility as a shoe sole member, and at the same time causes the elastic body matrix and the resin foam particles to be hardly separated from each other at their adhesive interface even when subjected to a high load, thereby having an advantage of being excellent in mechanical strength such as tensile strength and an elongation rate. In addition, since the shoe of this embodiment includes the shoe sole member, the shoe exhibits soft wearing feeling when the foot fits in the shoe, and can exhibit high mechanical strength.

Although detailed description beyond the above will not be repeated here, conventionally known technical matters on shoe sole members may be optionally employed in the present invention even if the matters are not directly described in the above.

### EXAMPLES

Hereinafter, the present invention will be elucidated by way of specific examples and comparative examples of the present invention. However, the present invention is not limited to the following examples.

The following particulate materials were used as the resin compositions used in Examples 1 to 7 and Comparative Examples 1 to 4 to be described later:
- Material for resin foam particles
   Polyolefin-based resin
- Materials for elastic body matrix
   Styrene-ethylene-butylene-styrene copolymer 1 (SEBS-1): Material obtained by mixing various SEBS materials, with density of 0.91 g/cm³ Styrene-ethylene-butylene-styrene copolymer 2 (SEBS-2): Tuftec P1083 manufactured by Asahi Kasei Corporation, with density of 0.89 g/cm³ Styrene-ethylene-butylene-styrene copolymer 3 (SEBS-3): Tuftec H1041 manufactured by Asahi Kasei Corporation, with density of 0.91 g/cm³ Styrene-ethylene-butylene-olefin crystal copolymer (SEBC): DAYNARON4600P manufactured by JSR Corporation, with density of 0.91 g/cm³
   Olefin multi-block copolymer (OBC): INFUSE9007 manufactured by the Dow Chemical Company, with density of 0.87 g/cm³
- Materials for binder
   Ethylene-α-olefin copolymer 1: TAFMER DF840 manufactured by Mitsui Chemicals, Inc., with density of 0.89 g/cm³
   Ethylene-α-olefin copolymer 2: TAFMER DF740 manufactured by Mitsui Chemicals, Inc., with density of 0.87 g/cm³
   Olefin crystal-ethylene-butylene-olefin crystal copolymer (CEBC):
   DAYNARON6200P manufactured by JSR Corporation, with density of 0.88 g/cm³
   Olefin multi-block copolymer (OBC): INFUSE9007 manufactured by the Dow Chemical Company, with density of 0.87 g/cm³

### (Resin foam particles)

A polyolefin-based resin as a material for the abovementioned resin foam particles was used to make the resin foam particles having a density (true density) of 0.165 g/cm³ and a particle size D50 = 4.1 mm, using a conventionally known method.

The Asker C hardness of the resin foam particles thus made was measured by the method shown below. First, a plurality of groups of resin foam particles that are composed of the abovementioned polyolefin-based resin and that respectively have different densities were made using a conventionally known method. The plate-shaped cavities of a forming mold were filled with the resin foam particles made for each group, and the foaming mold was heated by steam, thereby integrating the resin foam particles together to mold a resin foam product composed of the resin foam particles. As described above, a plurality of resin foam products respectively having different densities were made. Next, the Asker C hardness was measured for each of the plurality of resin foam products respectively having different densities, using a method similar to the method for the resin composite, which will be described later. Thereafter, an approximate expression showing the relationship with the density and the Asker C hardness measured for each of the plurality of resin foam products was created, followed by applying the density of the resin foam particles (0.165 g/cm³) to the approximate expression to measure the Asker C hardness of the resin foam particles. The Asker C hardness of the resin foam particles thus measured was 40.

### (Elastomer)

One or two kinds of the abovementioned materials for the elastic body matrix and paraffin oil (density of 0.88 g/cm³) as a plasticizer were mixed together at a ratio shown in Table 1 using a commercially available twin-screw extruding kneader at 120 to 200 °C to produce gel-like elastomers 1 to 4 (GELs 1 to 4) shown in Table 1 below. For each of these elastomers 1 to 4, the density was calculated from its weight and volume. Further, the Asker C hardness or the Shore A hardness was measured for each of the elastomers, using a method similar to the method for the resin composite, which will be described later. The results are shown in Table 1.

**Table 1**

| Elastomer | Material (Mixing ratio of plasticizer (weight ratio)) | Density (g/cm³) | Hardness (ASKER-C) | Hardness (MPa) |
|---|---|---|---|---|
| GEL 1 | SEBS-1 (Material: Plasticizer = 100: 160) | 0.90 | 42 | - |
| CEL2 | SEBS-2 (Material: Plasticizer = 100: 150) | 0.89 | 35 | - |
| GEL3 | SEBC/OBC (50/50 weight %) (Material: Plasticizer = 100: 100) | 0.88 | 50 | - |
| GEL4 | SEBS-3 (Material: Plasticizer = 100: 0) | 0.91 | - | 84 |

### (Binder)

The materials for the binder and paraffin oil (density of 0.88 g/cm³) as a plasticizer were mixed together at a ratio that materials for the binder: plasticizer = 50: 50 (weight ratio), using a commercially available twin-screw extruding kneader at 120 to 200 °C to produce gel-like binders 1 to 4 shown in Table 2 below. Further, the ethylene-α-olefin copolymer 1 itself as the abovementioned material for the binder with no plasticizer added thereto was used to as binder 5. For each of these binders 1 to 5, the density was calculated from its weight and volume. Further, the Asker C hardness or the Shore A hardness was measured for each of the elastomers, using a method similar to the method for the resin composite, which will be described later. The results are shown in Table 2.

**Table 2**

| Binder | Material | Density (g/cm³) | Hardness (ASKER-C) | Hardness (MPa) |
|---|---|---|---|---|
| Binder 1 | Ethylene-α-olefin copolymer 1 | 0.88 | 80 | - |
| Binder 2 | Ethylene-α-olefin copolymer 2 | 0.87 | 55 | - |
| Binder 3 | CEBC | 0.87 | 50 | - |
| Binder 4 | OBC | 0.87 | 54 | - |
| Binder 5 | Ethvlene-α-olefin copolymer 1 | 0.88 | - | 86 |

### (Production of resin composite)

### Examples 1 to 7 and Comparative Example 4

First, as materials used for the following production method, elastomers, resin foam particles, and binders of the kinds shown in Table 3 below were prepared in amounts (weight %) shown in Table 3.

The resin foam particles and the binder were kneaded together using a commercially available two-roll kneader to obtain resin foam particles having surfaces to which the binder was almost entirely attached.

The thus obtained resin foam particles to which the binder was attached and the elastomer were kneaded together at 110 °C using a commercially available two-roll kneader to allow the elastomer to melt and form an elastic body matrix composed of the elastomer, as well as causing the resin foam particles to be dispersed in the elastic body matrix. Thereafter, the kneaded product was cooled to room temperature.

Subsequently, the cavities of a foaming mold were filled with the kneaded product (in so doing, the kneaded product may be cut off, as appropriate, to allow the cavities to be filled with the kneaded product), and the forming mold was heated for two minutes under pressure by a heat press machine, followed by cooling with cold water for 10 minutes, to obtain a resin composite. The obtained resin composite had the resin foam particles dispersed in an elastic body matrix in which the elastic body matrix material was a continuous body as a whole. At this time, the binder lied between the elastic body matrix and each of the resin foam particles as a whole. Few portions at which the resin foam particles were welded to each other via the binder were present.

### Comparative Examples 1 to 3

Elastomers and resin foamed particles of the kinds shown in Table 3 below were prepared in amounts (volume %) shown in Table 3. Thereafter, a resin composite was obtained by kneading and hot pressing each kind of the resin foam particles and each kind of the elastomers using the same method as in Examples 1 to 7 described above, without performing a step of attaching the binder to the resin foam particles. The obtained resin composite had the resin foam particles dispersed in an elastic body matrix in which the elastic body matrix material was a continuous body as a whole.

### (Physical property test of shoe sole member)

### Density measurement

The density of each of the resin composites of Examples 1 to 7 and Comparative Examples 1 to 4 was calculated from the weight and the volume of each corresponding one of the resin composites. The results are shown in Table 3 below.

### Measurement of hardness

The hardness of each of the resin composites of Examples 1 to 7 and Comparative Examples 1 to 4 was measured at 23 °C using a "Type C durometer" manufactured by Kobunshi Keiki Co., Ltd., as an Asker type C durometer. The results are shown in Table 3 below.

### Measurement of tensile strength and elongation rate

Each of the resin composites of Examples 1 to 7 and Comparative Examples 1 to 4 was cut into a flat plate having a thickness of 4 mm, followed by cutting the flat plate using a dumbbell-shaped type-2 punching die based on JIS K 6251 to obtain a dumbbell-shaped test piece for each of the resin composites. Each of the test pieces was subjected to a tensile test based on JIS K 6251, using an autograph precision universal tester (product name "AG-50kNIS MS" manufactured by Shimadzu Corporation) at 23 °C and at a crosshead speed of 500 mm/min, to thereby measure the tensile strength and the elongation rate of the test piece. The results are shown in Table 3 below.

**Table 3**

| | Resin foam particles / Elastic body (weight ratio) | Molded resin composite | | | |
|---|---|---|---|---|---|
| | | Density (g/cm³) | Hardness (ASKER-C) | Tensile strength (MPa) | Elongation rate (%) |
| Ex. 1 | Foam / GEL 1 / binder 1 (20/60/20) | 0.56 | 45 | 0.94 | 230 |
| Ex. 2 | Foam / GEL 1 / binder 1 (10/80/10) | 0.68 | 45 | 0.84 | 440 |
| Ex. 3 | Foam / GEL 1 / binder 2 (20/60/20) | 0.52 | 52 | 0.39 | 100 |
| Ex. 4 | Foam / GEL 1 / binder 3 (20 / 60 / 20) | 0.56 | 56 | 0.53 | 330 |
| Ex. 5 | Foam / GEL 1 / binder 4 (20 / 60/ 20) | 0.60 | 60 | 0.33 | 130 |
| Ex. 6 | Foam / GEL 2 / binder 1 (20 / 60/ 20) | 0.57 | 57 | 0.91 | 350 |
| Ex. 7 | Foam / GEL 3 / binder 5 (10 / 80/ 10) | 0.78 | 52 | 1.10 | 570 |
| C. Ex. 1 | Foam / GEL 1 (20 / 80) | 0.60 | 42 | 0.14 | 120 |
| C. Ex. 2 | Foam / GEL 1 (10 / 90) | 0.70 | 45 | 0.17 | 150 |
| C. Ex. 3 | Foam / GEL 3 (10 / 90) | 0.74 | 50 | 0.70 | 400 |
| C. Ex. 4 | Foam / GEL 4 / binder 1 (20 / 60/ 20) | 0.76 | 82 | 2.19 | 150 |

As is evident from Table 3, it is understood that each of the resin composites of Examples 1 to 7, in which the binder lies between the elastic body matrix and the resin foam particles, has a high tensile strength and a high elongation rate, as compared with a resin composite out of the resin composites of Comparative Examples 1 to 3 that includes the resin foam particles at the same volume ratio. In addition, it is understood that each of the resin composites of Examples 1 to 7, in which the binder has a hardness higher than the hardness of the elastomer constituting the elastic body matrix, has a sufficiently low hardness for being used as the shoe sole member. On the other hand, it is understood that the resin composite of Comparative Example 4, which includes the elastomer having a hardness higher than the hardness of the binder, has a high tensile strength and a high elongation rate but has a considerably high hardness, and is therefore not suitable for being used for the shoe sole member. Thus, it is understood that each of the resin composites of Examples 1 to 7 is excellent in mechanical strength such as tensile strength and an elongation rate while having sufficient flexibility as the shoe sole member.

### REFERENCE SIGNS LIST

- 1:: Shoe
- 3:: Midsole
- 4:: Outer sole
- 31:: Elastic body matrix
- 32:: Resin foam particle
- 33:: Binder

## Claims

1. A shoe sole member partially or entirely formed of a resin composite, the resin composite comprising: a non-foamed elastic body matrix composed of an elastomer; a plurality of resin foam particles dispersed in the elastic body matrix; and a binder that lies between the elastic body matrix and the plurality of resin foam particles and has a hardness at 23 °C that is higher than a hardness at 23 °C of the elastic body matrix.

2. The shoe sole member according to claim 1, wherein the hardness at 23 °C of the binder is higher than a hardness at 23 °C of the plurality of resin foam particles.

3. The shoe sole member according to claim 1, wherein the hardness at 23 °C of the binder is lower than a hardness at 23 °C of the plurality of resin foam particles.

4. The shoe sole member according to any one of claims 1 to 3, wherein the elastomer comprises a polystyrene-based elastomer and the binder comprises a polyolefin-based resin.

5. The shoe sole member according to any one of claims 1 to 4, wherein the plurality of resin foam particles are composed of a resin composition comprising a polyolefin-based resin, and the binder comprises a polyolefin-based resin.

6. A shoe comprising the shoe sole member according to any one of claims 1 to 5.
